# EUROPÄISCHE PATENTSCHRIFT

(11) **EP 1 583 892 B1**
(45) Veröffentlichungstag und Bekanntmachung des Hinweises auf die Patenterteilung: **05.05.2010**
(21) Anmeldenummer: 03782398.6
(22) Anmeldetag: 13.12.2003
(51) Int. Cl.: F01N 9/00, F01N 3/023, F01N 3/027, F02D 35/00, F02D 21/08

(54) **VERFAHREN ZUM REGELN EINER HEIZEINRICHTUNG EINES PARTIKELFILTERS**
METHOD FOR REGULATING A HEATING DEVICE OF A PARTICLE FILTER
PROCEDE DE REGULATION D'UN DISPOSITIF DE CHAUFFAGE DE FILTRE A PARTICULES

(30) Priorität: 13.01.2003 DE 10301035
(43) Veröffentlichungstag der Anmeldung: 12.10.2005
(73) Patentinhaber: HJS Fahrzeugtechnik GmbH & Co. KG, 58706 Menden (DE)
(72) Erfinder: SCHULTE, Hermann-Josef, 58710 Menden (DE); FRISSE, Hans-Peter, 52134 Herzogenrath (DE); SCHINDLER, Arno, 58730 Fröndenberg (DE); SCHREWE, Klaus, 59602 Rüthen (DE)
(74) Vertreter: Haverkamp, Jens
(86) Internationale Anmeldenummer: PCT/EP2003/014217
(87) Internationale Veröffentlichungsnummer: WO 2004/063542

(56) Entgegenhaltungen:
- DE-A- 19 926 138
- US-A- 4 424 671
- US-A- 4 462 379
- US-A- 4 719 751
- US-A- 5 511 413
- US-A1- 2002 073 696
- US-A1- 2002 078 681
- PATENT ABSTRACTS OF JAPAN vol. 013, no. 045 (M-792), 2. Februar 1989 (1989-02-02) & JP 63 253108 A (TOYOTA MOTOR CORP), 20. Oktober 1988 (1988-10-20)

## Beschreibung

Die Erfindung betrifft ein Verfahren zum Regeln der Ansteuerung einer Heizeinrichtung zum Regenerieren eines in den Abgasstrang einer Brennkraftmaschine, etwa eines Dieselmotors eingeschalteten Partikelfilters.

Zur Reduzierung des Partikelausstoßes, insbesondere eines Rußausstoßes bei einem Betrieb von Dieselmotoren, werden in den Abgasstrang des Dieselmotors sogenannte Dieselpartikelfilter eingeschaltet, so dass der Abgasstrom durch den Filterkörper dieser Partikelfilter geführt wird. Bei diesem Prozess lagern sich an der anströmseitigen Oberfläche des Filterkörpers in dem Abgasstrom enthaltene Partikel, insbesondere Rußpartikel, ab. Ausgehend von einem Partikelfilter, auf dem noch kein Ruß abgelagert ist, lagert sich im Laufe des Betriebs des Dieselmotors zunehmend mehr Ruß auf der anströmseitigen Oberfläche des Filterkörpers ab. Um dennoch eine Durchströmbarkeit des Partikelfilters über längere Zeiträume hinweg zu gewährleisten, ist es notwendig, den aus dem Abgasstrang ausgeschiedenen Ruß von Zeit zu Zeit von dem Partikelfilter zu entfernen. Das Entfernen des Rußes von dem Partikelfilter wird auch als Regeneration bezeichnet.

Zum Regenerieren eines solchen Partikelfilters ist bekannt, den Ruß mittels eines Rußabbrandes zu beseitigen. Eine Beseitigung des abgelagerten Rußes auf der anströmseitigen Oberfläche des Partikelfilters tritt selbsttätig dann ein, wenn die den Partikelfilter anströmende Abgastemperatur höher ist als die Zündtemperatur des Rußes. Dieses ist im allgemeinen bei einem Dieselmotor dann der Fall, wenn er über eine gewisse Zeitdauer unter einer bestimmten Last steht, beispielsweise bei einem Personenkraftwagen bei einer zügigen Autobahnfahrt. Um jedoch eine Regeneration durchzuführen und somit eine bestimmungsgemäße Funktionstüchtigkeit eines Partikelfilters auch in solchen Motorlastzuständen sicher stellen zu können, in denen die Abgastemperatur unterhalb der Zündtemperatur des Rußes liegt, sind Verfahren bekannt geworden, um in Abhängigkeit von dem Beladungszustand des Partikelfilters mit Ruß einen Rußabbrand auszulösen. Der Rußabbrand wird durch Zuführen zusätzlicher thermischer Energie, beispielsweise durch thermoelektrische Heizelemente oder durch Brenner oder durch innermotorische Maßnahmen, die zu einer erhöhten Abgastemperatur führen, ausgelöst. Damit eine bestimmungsgemäße Regeneration des Partikelfilters durch Rußabbrand erfolgen kann, ist es notwendig, dass sich auf der anströmseitigen Oberfläche des Partikelfilters eine gewisse Rußmenge akkumuliert hat. Ist die auf dem Partikelfilter akkumulierte Rußmenge zu gering, kann dies zu einem unvollständigen Rußabbrand führen. Ist hingegen die akkumulierte Rußmenge zu groß, kann dies bei einem Rußabbrand zu einer Beschädigung des Partikelfilters führen.

Zu diesem Zweck wird gemäß dem in US 4,424,671 A beschriebenen Verfahren der in Strömungsrichtung vor dem Partikelfilter im Abgasstrang herrschende Abgasgegendruck erfasst, da der Abgasgegendruck ein Maß für den Beladungszustand des Partikelfilters ist. Mit zunehmender Rußbeladung des Partikelfilters steigt der Abgasgegendruck. Der im diesem Bereich des Abgasstrangs herrschende Gegendruck ist jedoch nicht nur abhängig von dem Beladungszustand des Partikelfilters, sondern insbesondere auch von anderen Betriebsgrößen, beispielsweise dem Lastzustand des Motors, in dem dieser sich zum Zeitpunkt des Erfassens des Abgasgegendruckes befindet. Bei Kraftfahrzeugen, bei denen dieses Verfahren Anwendung findet, werden daher zur Bestimmung des Beladungszustandes des Partikelfilters nicht nur das Abgasgegendrucksignal gemessen, sondern weitere, den Betriebszustand des Motors und insbesondere seinen Lastzustand erfassende Größen, wie beispielsweise die dem Motor zugeführte Verbrennungsluft, die Motordrehzahl und dergleichen. Mit diesen und weiteren Größen wird zur Bestimmung des Beladungszustandes des Partikelfilters das ermittelte Abgasgegendrucksignal ausgewertet und bewertet, um die in dem Abgasgegendrucksignal enthaltenen Störgrößen, die keinen Rückschluss auf den Beladungszustand des Partikelfilters erlauben, zu eliminieren. Zu diesem Zweck müssen zum Durchführen eines solchen Verfahrens etwa in einem Kraftfahrzeug oder auch bei Dieselmotor betriebenen Baumaschinen mehrere Schnittstellen vorgesehen sein, um die benötigten Messgrößen erfassen und auswerten zu können. Auch wenn das Schaffen der Schnittstellen bei einer Neukonzeption eines Fahrzeuges weniger problematisch sein dürfte, so stellt dies jedoch im allgemeinen ein Ausschlusskriterium dar, um ein Kraftfahrzeug mit einem Dieselpartikelfilter, der in bestimmten zeitlichen Abständen regeneriert werden soll, nachzurüsten, insbesondere wenn dies mit einem vertretbaren Aufwand vorgenommen werden soll. Entsprechendes gilt für Baumaschinen.

US 5,511,413 A beschreibt, dass zum Bestimmen des Rußbeladungszustandes eines Partikelfilters neben dem Druck zusätzlich die Temperatur des den Partikelfilter anströmenden Abgases erfasst wird. Gleichwohl ist es notwendig, bei dem in diesem Dokument beschriebenen Verfahren zumindest zwei Messgrößen erfassen zu müssen.

Ausgehend von diesem diskutierten Stand der Technik liegt dieser Erfindung daher die Aufgabe zugrunde, ein eingangs genanntes, gattungsgemäßes Verfahren dergestalt weiterzubilden, dass mit diesem eine Bestimmung des Beladungszustandes eines in den Abgasstrang eingeschalteten Partikelfilters mit Ruß hinreichend genau bestimmen lässt, ohne zwingend eine Schnittstelle zum Bereitstellen bestimmter Motorbetriebszustandsgrößen zu benötigen.

Diese Aufgabe wird erfindungsgemäß zum einen dadurch gelöst, dass der durch den Partikelfilter erzeugte Abgasgegendruck als Maß für den Rußbeladungszustand des Partikelfilters erfasst wird und der Abgasgegendruck gemessen wird, wenn die Bedingungen erfüllt sind,
- dass sich der Motor im Leerlauf befindet,
- dass die Abgasrückführung ausgeschaltet ist und
- dass sich in dem dem Partikelfilter vorgeschalteten Teil des Abgasstranges diesem Motorbetriebszustand entsprechende Verhältnisse eingestellt haben und
dass anschließend das Abgasgegendrucksignal mit einem eine ausreichende Rußbeladung zum Auslösen einer Regeneration des Partikelfilters darstellenden Schwellwert verglichen wird und die Heizeinrichtung zum Auslösen des Regenerationsvorganges angeschaltet wird oder angeschaltet werden kann, wenn das erfasste Abgasgegendrucksignal größer ist als der Schwellwert. Diese Lösung wird bevorzugt angewendet für solche Brennkraftmaschinen, die dynamisch beansprucht sind und sich immer wieder einmal im Leerlauf befinden, wie dieses bei Kraftfahrzeugen regelmäßig der Fall ist.

Gelöst wird die vorgenannte Aufgabe zum anderen dadurch, dass innerhalb eines Betriebsabschnittes wiederholt die Temperatur des den Partikelfilter anströmenden Abgases erfasst, in Abhängigkeit von der aktuellen Drehzahl der Brennkraftmaschine hinsichtlich einer diesen Betriebszustand zugeordneten Partikelfilterbeladungsgröße ausgewertet, die Auswerteergebnisse aufsummiert, die Summe mit einem vorgegebenen, den Beladungszustand des Partikelfilters für eine Regeneration als geeignet darstellenden Grenzwert verglichen und bei Überschreiten des Grenzwertes die Heizeinrichtung zum Auslösen des Regenerationsvorganges freigeschaltet wird und dass nach dem Regenerationsvorgang ein neuer Betriebsabschnitt beginnt. Diese Lösung bietet sich zur Verwendung bei solchen Brennkraftmaschinen an, die entweder nur selten einen Betriebszustand erreichen, bei dem ein selbsttätiger Rußabbrand erfolgt, oder bei solchen, bei deren Betrieb in aller Regel keine Leerlaufphasen vorgesehen sind oder eintreten. Dies ist in aller Regel bei Dieselmotor betriebenen Baumaschinen, beispielsweise zum Antreiben hydraulischer Systeme der Fall.

Bei beiden Verfahren werden weitere Betriebsgrößen grundsätzlich nicht benötigt. Die benötigten Betriebsgrößen lassen sich ohne weiteres mit Sensoren bei einer Nachrüstung erfassen. Somit eignen sich die vorgeschlagenen Verfahren insbesondere auch zur Nachrüstung vorhandener Brennkraftmaschinen.

Bei dem erstgenannten Verfahren wird grundsätzlich eine Erfassung weiterer Betriebsgrößen zur Kompensation des erfassten Abgasgegendrucksignales nicht benötigt. Dieses Verfahren nutzt die Tatsache, dass das erfassbare Abgasgegendrucksignal bei im Leerlauf und ohne Last befindlichem Motor weitestgehend durch den Partikelfilter und seinen Beladungszustand bestimmt wird. Zur Erhöhung des Messkontrastes zwischen dem Abgasgegendruck, der sich bei unbeladenem Partikelfilter einstellt und demjenigen, der sich bei rußbeladenem Filter einstellt, wird vor dem Erfassen des Abgasgegendrucksignales die bei modernen Dieselmotoren regelmäßig vorhandene Abgasrückführung ausgeschaltet, was einen größeren Volumentransport innerhalb des Abgasstranges zur Folge hat. Nach dem Erfassen bzw. Messen des Abgasgegendrucksignals in dem beschriebenen Betriebszustand wird dieses mit einem Schwellwert verglichen, der als Maß für das Vorliegen einer ausreichenden Rußbeladung des Partikelfilters, bei dem sich eine ausreichende Rußmenge auf dem Filter abgelagert hat, um eine bestimmunsgemäße Regeneration auslösen zu können, dient. Wird dieser Schwellwert überschritten, kann grundsätzlich ein Rußabbrand durch Anschalten der Heizeinrichtung, beispielsweise durch Bestromen einer thermoelektrischen Heizeinrichtung ausgelöst werden. Um jedoch einen zu frühen Rußabbrand infolge eines fehlerhaften Abgasgegendrucksignals zu vermeiden, ist in einer vorteilhaften Weiterbildung dieses Verfahrens vorgesehen, dass die Heizeinrichtung erst dann angeschaltet wird, wenn auch das erfasste Abgasgegendrucksignal der unmittelbar vorangegangenen Leerlaufphase oder von zwei oder mehr unmittelbar vorangegangenen Leerlaufphasen den Schwellwert überschritten haben.

Bei Einsatz des Verfahren in einem Kraftfahrzeug erfolgt eine Regeneration des Partikelfilters entweder durch aktives Auslösen einer Regeneration in der beschriebenen Art und Weise oder dadurch, dass durch einen vorgegebenen, länger anhaltenden Lastzustand des Motors die Abgastemperatur am Partikelfilter ausreichend hoch ist, damit eine Regeneration des Partikelfilters selbsttätig erfolgt. Für den Fall jedoch, dass sich weder der eine noch der andere Zustand einstellen und somit eine Regeneration des Partikelfilters nicht stattfinden würde, ist es zweckmäßig, aktiv eine Regeneration auszulösen, wenn ein bestimmter vorgegebener Betriebsabschnitt abgelaufen ist. Eine solche Betriebsabschnittsbemessung kann beispielsweise ein zeitliches Intervall über die Motorlaufzeit und/oder bei einem Kraftfahrzeug auch die zurückgelegte Wegstrecke sein. Ist ein solcher Betriebsabschnitt beendet, wird aktiv eine Regeneration des Partikelfilters ausgelöst.

Bei dem zweitgenannten Verfahren wird grundsätzlich lediglich ein Temperatursensor zum Erfassen der Temperatur des den Partikelfilter anströmenden Abgases benötigt. Ein Abgriff der Drehzahl des Motors ist ohne weiteres realisierbar, insbesondere auch ohne eine Schnittstelle im Motormanagementsystem zwingend zu benötigen. Diesem Verfahren liegt die Erkenntnis zugrunde, dass sich bei einer Erhöhung der Last bei konstanter Drehzahl die Abgastemperatur erhöht. Der Betrieb einer Brennkraftmaschine unter höherer Last hat aufgrund der größeren zur Verbrennung benötigten Treibstoffmenge ebenfalls einen höheren Rußausstoß zur Folge. Daher kann diese Größe als Maß für den jeweils aktuellen Beladungszuwachs des Partikelfilters herangezogen werden. Über sich innerhalb eines Betriebsabschnittes wiederholende Temperatur-Drehzahl-Messungen kann auf den aktuellen Rußbeladungszustand des Partikelfilters geschlossen werden. Die aus den erfassten Temperatur- und Drehzahldaten ermittelten Beladungsgrößen werden aufsummiert, um die über die Betriebsdauer der Brennkraftmaschine in diesem Betriebsabschnitt zunehmende Rußbeladung des Partikelfilters nachhalten zu können. Erreicht die auf diese Art und Weise bestimmte aktuelle Rußbeladung des Partikelfilters einen vorgegebenen Grenzwert, der so gewählt ist, dass der Beladungszustand des Partikelfilters zum Auslösen eines Rußabbrandes geeignet ist, der jedoch auf der anderen Seite auch so gewählt sein kann, dass der Beladungszustand noch keine kritische Größe erreicht hat, die den Betrieb der Brennkraftmaschine beeinträchtigen oder bei der bei einem Rußabbrand die Gefahr bestehen würde, dass der Partikelfilter beschädigt werden könnte, so wird mit Erreichen oder bei Überschreiten dieses Grenzwertes die Heizeinrichtung freigeschaltet, damit grundsätzlich ein Rußabbrand gezündet werden kann. Je nach Betrieb des Verfahrens kann mit dem Freischalten der Heizeinrichtung diese gleichzeitig angeschaltet werden, so dass der Rußabbrand mit der Freischaltung ausgelöst wird, oder die Heizeinrichtung wird erst dann eingeschaltet, wenn eine weitere Bedingung, etwa dass der Motor in einem bestimmten Betriebszustand läuft. Das Abhängigmachen des Anschaltens der Heizeinrichtung von dem Vorhandensein eines bestimmten Motorbetriebszustandes hat zur Folge, dass der Rußabbrand ausgelöst werden kann, wenn ein für einen Rußabbrand möglichst optimaler Betriebszustand des Motors gegeben ist. In Abhängigkeit von dem aktuellen Betriebszustand des Motors kann der ausgelöste Rußabbrand unterschiedliche Regenerationserfolge hinsichtlich des regenerierten Filterflächenanteils aufweisen. Daher ist es zweckmäßig, nach Freischalten der Heizeinrichtung zum Auslösen des Regenerationsvorganges zunächst innerhalb einer vorbestimmten Zeitspanne abzuwarten, ob der Motor in einen solchen Betriebszustand gebracht wird. Dieses erfolgt innerhalb einer vorgegebenen Zeitspanne, damit bei fruchtlosem Verstreichen derselben in jedem Fall die Heizeinrichtung angeschaltet wird, um den Rußabbrand zu zünden. Innerhalb dieser Zeitspanne kann vorgesehen sein, die Anforderungen hinsichtlich der Qualität des Regenerationserfolges bei einem bestimmten Motorbetriebszustand zu reduzieren.

Im Rahmen dieser Ausführungen ist unterschieden zwischen den Begriffen "Freischalten" und "Anschalten". Freigeschaltet ist eine Heizeinrichtung, wenn eine erste Bedingung erfüllt ist. Je nach Ausgestaltung des Verfahrens kann mit dem Freischalten gleichzeitig auch das Zünden des Rußes durch Anschalten der Heizeinrichtung erfolgen. Gemäß weiteren Ausgestaltungen wird die Heizeinrichtung erst dann angeschaltet, wenn eine oder weitere Bedingungen erfüllt sind. Daher liegen in letzterem Falle in aller Regel die Zeitpunkte des Freischaltens und des Anschaltens zeitlich auseinander.

Nachfolgend ist die Erfindung anhand von Ausführungsbeispielen unter Bezugnahme auf die beigefügten Figuren beschrieben. Es zeigen:
- **Fig. 1:**: ein Flussdiagramm zum Darstellen eines Verfahrens zum Regeln der Ansteuerung einer thermoelektrischen Heizeinrichtung zum Regenerieren eines in den Abgasstrang eines Dieselmotors eines Kraftfahrzeuges eingeschalteten Partikelfilters,
- **Fig. 2:**: ein Arbeitsfeld darstellendes Diagramm eines weiteren Verfahrens zum Regeln der Ansteuerung einer thermoelektrischen Heizeinrichtung zum Regenerieren eines in den Abgasstrang eines Dieselmotors eines Kraftfahrzeuges eingeschalteten Partikelfilters.

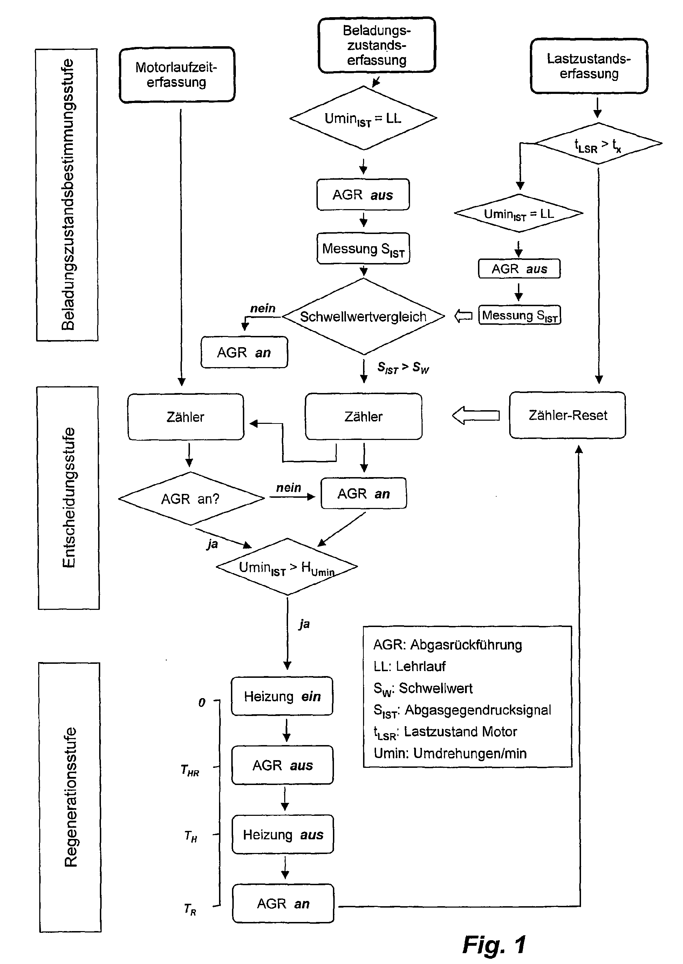

Bei dem in Figur 1 dargestellten Verfahren wird in jeder Leerlaufphase des Motors der Rußbeladungszustand des Partikelfilters durch Messen des Abgasgegendruckes S_{IST} bestimmt. Um sicherzustellen, dass weitestgehend konstante Abgasgegendruckverhältnisse in dem dem Partikelfilter vorgeschalteten Abgasstrang vorherrschen erfolgt eine Messung des Abgasgegendruckes S_{IST} bei der beschriebenen Ausgestaltung erst nachdem sich der Leerlaufzustand fünf Sekunden stabilisiert hat. Mit Erreichen der Leerlaufdrehzahl wird die Abgasrückführung AGR ausgeschaltet. Mit dem eigentlichen Messen des Abgasgegendruckes wird gewartet, bis sich ausreichend konstante Verhältnisses in diesem Teil des Abgasstranges für die Abgasgegendruckmessung eingestellt haben. Grundsätzlich kann ein vorbestimmtes oder vorgegebenes der Betriebssituation angepasstes Zeitintervall abgewartet werden, bis die Abgasgegendruckmessung durchgeführt wird. Gemäß einer anderen Ausgestaltung ist vorgesehen, den Abgasdruck kontinuierlich zu erfassen und denjenigen Wert für die nachfolgende Auswertung zu benutzen, der innerhalb gewisser Toleranzgrenzen einer bestimmten Anzahl von vorangegangenen Messungen entspricht. Die sich dann einstellende Konstanz der ermittelten Abgasgegendruckwerte gilt als Maß dafür, dass sich in dem dem Partikelfilter vorgeschalteten Abgasstrangabschnitt konstante Verhältnisse eingestellt haben. Die dazu ggf. benötigte Drehzahlerfassung kann ohne weiteres über einen Abgriff an der Lichtmaschine des Dieselmotors vorgenommen werden.

Das erfasste Abgasgegendrucksignal S_{IST} wird anschließend mit einem Schwellwert S_{W} verglichen. Die Größe des Schwellwertes S_{W} stellt einen Abgasgegendruck dar, bei dem davon ausgegangen werden kann, dass die Rußbeladung des Partikelfilters ausreichend hoch ist, um einen bestimmungsgemäßen Rußabbrand auslösen zu können. Ist das Abgasgegendrucksignal S_{IST} größer als der Schwellwert S_{W} wird ein Auslösesignal generiert, dass einen Zähler "Beladungszustandserfassung" beaufschlagt. Eine tatsächliche Auslösung des Regenerationsvorganges wird bei dem dargestellten Ausführungsbeispiel aus Messredundanzgründen jedoch erst dann gestartet, wenn sowohl das Abgasgegendrucksignal S_{IST} sowie mehrere, beispielsweise zwei unmittelbar zuvor ermittelte Abgasgegendrucksignale größer sind als der Schwellwert S_{W}.

Für den Fall, dass sich über einen bestimmten Betriebsabschnitt hinweg ein Leerlauf nicht einstellt, wird bei dem dargestellten Ausführungsbeispiel auch die Motorlaufzeit erfasst. Die Motorlaufzeit wird in einem weiteren Zähler "Motorlaufzeiterfassung" überwacht. Erfolgt innerhalb einer vorgegebenen Zeitspanne des Betriebs des Dieselmotors keine anderweitig ausgelöste Regeneration des Partikelfilters, dann wird eine Regeneration des Partikelfilters aufgrund des Überschreitens der vorgegebenen Motorlaufzeit ausgelöst. Die vorgegebene Zeitspanne, nach der eine Filterregeneration ausgelöst wird, ist so bemessen, dass bei einem durchschnittlichen Lastbetrieb des Dieselmotors nach Ablauf dieser Zeitspanne eine ausreichende Rußbeladung am Partikelfilter vorliegt, um eine bestimmungsgemäße Regeneration vornehmen zu können.

Die beschriebene Beladungszustandserfassung und die beschriebene Motorlaufzeiterfassung dienen somit einer Bestimmung des Beladungszustandes des Partikelfilters.

Parallel zu den beiden beschriebenen Erfassungen wird ebenfalls eine Erfassung des Lastzustandes des Dieselmotors vorgenommen. Diese Lastzustandserfassung kann sich darauf reduzieren, allein diejenigen Zustände zu erfassen, in denen ein Rußabbrand selbsttätig erfolgt und sich somit der Dieselmotor über eine bestimmte Zeitdauer hinweg in einem vorgegebenen Lastzustand befindet, so dass die Abgastemperatur ausreichend hoch ist, um eine Rußselbstentzündung auszulösen. Dieser Lastzustand lässt sich beispielsweise über die Drehzahl des Dieselmotors und eine Beobachtung der Dauer des Verbleibes des Dieselmotors in diesem Lastzustand erfassen. Denkbar ist ebenfalls eine Erfassung der Abgastemperatur vor dem Partikelfilter. Wird der Dieselmotor in dem zur Selbstregeneration vorgesehenen Lastzustand über eine bestimmte Zeitspanne tₓ hinweg betrieben, kann davon ausgegangen werden, dass sich der Partikelfilter selbsttätig regeneriert hat. Ist dies festgestellt, werden die Zähler zur Erfassung der Motorlaufzeit und der Beladungszustandserfassung über die Ermittlung des Abgasgegendruckes zurückgesetzt.

Ist der zuvor beschriebene Lastzustand zur Selbstregeneration des Partikelfilters erreicht, kann die nachfolgende Leerlaufphase genutzt werden, um den Schwellwert S_{W} an den sich über die Zeit kontinuierlich erhöhenden Abgasgegendruck des Partikelfilters zu adaptieren. Wird der Partikelfilter nicht gereinigt, erhöht sich der durch den Partikelfilter verursachte Abgasgegendruck im Laufe der Betriebsdauer durch allmähliche Akkumulation von Aschepartikeln als unvermeidbare Reste der Regenerationsvorgänge. Das in dieser Leerlaufphase erfasste Abgasgegendrucksignal stellt dann bezüglich seiner Größe einen "neuen" Wert für den Abgasgegendruck für den unbeladenen Partikelfilter dar. In Abhängigkeit von der sich darstellenden Änderung zwischen dem aktuellen Wert des unbeladenen Partikelfilters und dem zuvor als Schwellwert verwendeten wird der für den Schwellwertvergleich notwendige Schwellwert S_{W} adaptiert. Der Schwellwert S_{W} kann auch im Hinblick auf andere Faktoren adaptiert werden, sollte dies gewünscht oder notwendig sein.

In der in Figur 1 als Entscheidungsstufe bezeichneten Phase des Verfahrens erfolgt die Bestimmung des Zeitpunktes, wann aktiv eine Regeneration des Partikelfilters ausgelöst wird. Dies kann erfolgen zum einen, wenn der Zähler der Beladungszustandserfassung über die Ermittlung des jeweilig vorherrschenden Abgasgegendruckes den vorgegebenen Wert erreicht hat. Für den Fall, dass die Abgasrückführung ausgeschaltet sein sollte, wird diese angeschaltet. Eine Bestromung der thermoelektrischen Heizeinrichtung erfolgt bei dem dargestellten Ausführungsbeispiel erst dann, wenn der Motor zudem eine bestimmte Mindestdrehzahl H_{Umin} erreicht hat. Mit höherer Drehzahl als der Leerlaufdrehzahl kann aus dem System eines Kraftfahrzeuges ein höherer Strom zum Bestromen der Heizeinrichtung abgezweigt werden. Ist diese Drehzahl H_{Umin} überschritten, wird die Heizeinrichtung bestromt und zwar mit allmählich zunehmender Stromstärke, damit ein Zuschalten der Heizeinrichtung für einen Benutzer nicht spürbar wird und die Lichtmaschine geschont wird. Die Bestromung der Heizeinrichtung bis zur Beaufschlagung derselben mit der maximalen Stromstärke kann sich beispielsweise über zwei Sekunden erstrecken.

Bei dem dargestellten Ausführungsbeispiel wird zum Einschalten der thermoelektrischen Heizeinrichtung die Abgasrückführung angeschaltet, bzw. bleibt eingeschaltet, falls im Zeitpunkt der Signalgenerierung diese angeschaltet war, damit durch den geringeren Volumentransport gegenüber einem Zustand mit angeschalteter Abgasrückführung innerhalb des Abgasstranges eine raschere Erwärmung möglich ist. Zum Gewährleisten eines besseren Rußabbrandes wird, nachdem die Heizeinrichtung über eine bestimmte Zeitdauer T_{HR} mit maximaler Stromstärke bestromt worden ist, die Abgasrückführung ausgeschaltet, damit innerhalb des Abgasstranges vor dem Partikelfilter ein höherer Sauerstoffgehalt enthalten ist, um den Rußabbrand zu unterstützen. Die thermoelektrische Heizeinrichtung bleibt für eine Zeitspanne T_{H} eingeschaltet und wird dann allmählich ausgeschaltet. Diese ist ausreichend lange vorgesehen, damit bei der eingesetzten Heizeinrichtung in jedem Fall ein Rußabbrand gezündet worden ist. Nach einem vorbestimmten Zeitintervall T_{R} wird die Abgasrückführung erneut eingeschaltet, da davon ausgegangen wird, dass in jedem Fall bis zu diesem Zeitpunkt ein vollständiger Rußabbrand erfolgt ist. Nach erfolgreicher Regeneration wird mit dem Anschalten der Abgasrückführung gleichzeitig eine Zurücksetzung der beiden Zähler "Motorlaufzeiterfassung" sowie "Beladungszustandserfassung" durchgeführt.

Wird durch den Zähler "Beladungszustandserfassung" der Regenerationsvorgang ausgelöst, erfolgt gleichzeitig eine Zurücksetzung des Zählers "Motorlaufzeiterfassung".

Wird während des Regenerationsprozesses der Motor abgeschaltet oder vor Erreichen des Zeitpunkts T_{R} eine anderweitige Störung des Regenerationsvorganges festgestellt, werden die Zähler "Beladungszustandserfassung" und "Motorlaufzeiterfassung" nicht zurückgesetzt und bei nächster Gelegenheit wird die Regeneration nochmals gestartet.

Für den Fall, dass innerhalb einer vorgegebenen Zeitspanne des Motorlaufes eine Regeneration nicht stattgefunden hat, wird von dem Zähler "Motorlaufzeiterfassung" ein Auslösesignal abgegeben.

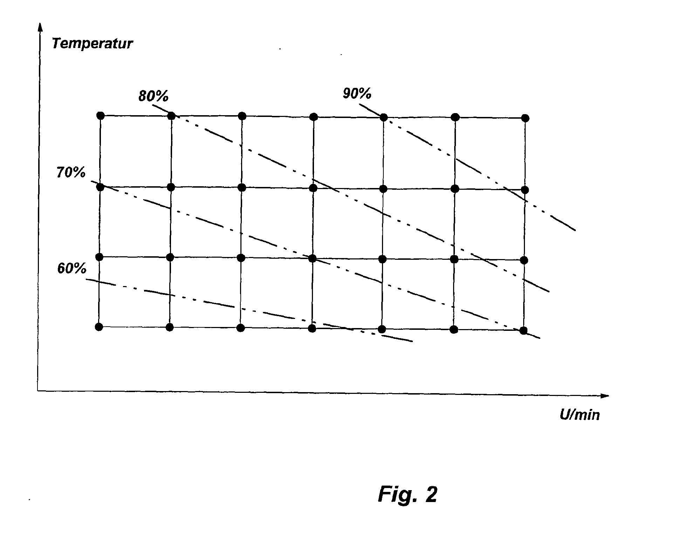

Figur 2 zeigt ein Temperatur-Drehzahl-Diagramm zur Bestimmung eines Arbeitsbereiches für ein weiteres Verfahren zum Regeln der Ansteuerung einer Heizeinrichtung zum Regenerieren eines in dem Abgasstrang eines Dieselmotors eingeschalteten Partikelfilters. Aufgetragen ist auf der y-Achse die Temperatur des Abgases anströmseitig bezüglich des Partikelfilters. Auf der x-Achse ist die Drehzahl des Motors aufgetragen. Die Knotenpunkte des in diesem Diagramm eingezeichneten Arbeitsbereiches stellen in Abhängigkeit von der Drehzahl und dem Lastzustand des Motors bei einer bestimmten Abgastemperatur, gemessen im Anströmbereich des Dieselpartikelfilters, eine Rußbeladungsmenge dar, die sich bei diesem Betriebszustand des Motors auf dem Partikelfilter ablagert. Bei diesem Verfahren wird die Rußbeladung des Partikelfilters nachvollzogen, indem die aus den aktuellen Temperatur-Drehzahl-Messungen ergebenden Auswerteergebnisse gemäß dem in Figur 2 dargestellten Arbeitsbereich innerhalb eines gewissen Zeitintervalls gemittelt und innerhalb eines Betriebsabschnittes aufsummiert werden. Die Mittelung mehrerer innerhalb eines Zeitintervalls vorgenommener Temperatur-Drehzahl-Messungen erfolgt, um den Rechenaufwand zu reduzieren und um Betriebsschwankungen auszugleichen. Aufsummiert werden diese über das in Figur 2 dargestellte Diagramm erlangten Auswerteergebnisse solange, bis ein vorgegebener Grenzwert erreicht ist. Dieser Grenzwert ist vorgegeben. Die Bemessung des Grenzwertes ist dergestalt konzipiert, dass bei Erreichen des Grenzwertes die Rußbeladung des Partikelfilters aufreichend und geeignet ist, um einen möglichst vollständigen Rußabbrand zu gewährleisten. Gleichwohl ist dieser Grenzwert ebenfalls so konzipiert, dass ein Rußabbrand noch nicht sofort bei Erreichen des Grenzwertes notwendig ist, sondern dass grundsätzlich die Rußbeladung des Partikelfilters noch zunehmen kann, ohne sich nachteilig auf den Betrieb der Brennkraftmaschine auszuwirken und auch ohne die Risiken einer zu starken Rußbeladung bei einem Rußabbrand hinnehmen zu müssen. Das Erreichen bzw. Überschreiten des Grenzwertes stellt bei diesem Verfahren eine erste Bedingung dar, die erfüllt sein muss, wenn die Heizeinrichtung angeschaltet werden soll.

Mit dem Erreichen des Grenzwertes wird die Heizeinrichtung bei dem Verfahren gemäß diesem Ausführungsbeispiel freigeschaltet, so dass das Anschalten der Heizeinrichtung davon abhängig ist, dass eine weitere Bedingung erfüllt ist. Diese zweite Bedingung ist bei dem beschriebenen Verfahren der Betriebszustand der Brennkraftmaschine. Bei diesem Verfahren ist man bestrebt, einen Rußabbrand dann zu zünden, wenn nicht nur die Rußbeladung des Partikelfilters dafür geeignet ist, sondern wenn auch die Betriebsbedingungen der Brennkraftmaschine für einen Rußabbrand günstig sind und diesen somit fördern. Gefördert wird der Rußabbrand durch ein möglichst heißes Abgas. In Figur 2 sind zu diesem Zweck Regenerationserfolgsisolinien eingetragen, an denen in Abhängigkeit von dem Betriebszustand des Motors und somit in Abhängigkeit von der Temperatur des Abgases vor dem Partikelfilter und der aktuellen Drehzahl der voraussichtliche Regenerationserfolg ablesbar ist. Die fiktiven Prozentangaben in dieser Figur geben die bei einer Regeneration voraussichtlich regenerierte Fläche der durch den Partikelfilter bereitgestellten Filterfläche wieder, wenn der Rußabbrand bei einem Betriebszustand gezündet wird, der auf einer der in Figur 2 dargestellten Linie liegt. Nachdem der Beladungsgrenzwert überschritten ist und somit die Heizeinrichtung freigeschaltet worden ist, wartet man mit dem Zünden des Rußabbrandes bis die Brennkraftmaschine einen solchen Betriebszustand erreicht hat, in dem eine möglichst vollständige Regeneration des Partikelfilters zu erwarten ist. Um eine übermäßige Beladung des Partikelfilters zu verhindern, ist eine Zeitspanne vorgegeben, innerhalb der der optimale, zum Anschalten der Heizeinrichtung notwendige Betriebszustand der Brennkraftmaschine erreicht sein muss. Diese Zeitspanne ist unterteilt in einzelne Zeitintervalle mit jeweils einem unterschiedlich hohen Anforderungskriterium an die Zustandbedingung der Brennkraftmaschine zum Anschalten der Heizeinrichtung. In einem ersten Zeitintervall wird man in aller Regel auf einen Betriebszustand der Brennkraftmaschine warten, bei der eine zumindest 90%ige Regeneration des Partikelfilters möglich ist. Wird innerhalb des ersten Intervalls diese Bedingung nicht erfüllt und somit eine Regeneration des Partikelfilters nicht durchgeführt, wird die Anforderung in dem zweiten Zeitintervall reduziert, beispielsweise auf 80%. Die Stufung der Zeitintervalle und der Grad der Reduzierung kann an die jeweiligen Betriebsbedingungen des Motors angepasst sein. Ist nach Ablauf der Zeitspanne die zweite Bedingung, nämlich das Erreichen eines bestimmten Motorbetriebszustandes nicht erreicht, wird in jedem Fall und unabhängig von dem Betriebszustand des Motors die Heizeinrichtung angeschaltet, um eine Regeneration des Partikelfilters auszulösen. Nach erfolgter Regeneration beginnt der nächste Betriebsabschnitt.

Anstelle einer Temperaturmessung unmittelbar im Anströmbereich des Partikelfilters kann diese auch an anderer Stelle im Abgasstrang anströmseitig vor dem Partikelfilter vorgenommen werden.

Dieses zu Figur 2 beschriebene Verfahren kann ebenfalls eingesetzt werden, um mit dem zu Figur 1 beschriebenen Verfahren kombiniert zu werden, wobei dann in aller Regel das zu Figur 2 beschriebene Verfahren eingesetzt wird, wenn innerhalb eines bestimmten Betriebsabschnittes eine Leerlaufphase nicht erreicht worden ist.

## Patentansprüche

1. Verfahren zum Regeln der Ansteuerung einer Heizeinrichtung zum Regenerieren eines in den Abgasstrang einer Brennkraftmaschine, etwa eines Dieselmotors eingeschalteten Partikelfilters, bei dem der durch den Partikelfilter erzeugte Abgasgegendruck als Maß für den Rußbeladungszustand des Partikelfilters erfasst wird, und der Abgasgegendruck (S_{IST}) gemessen wird, wenn die Bedingungen erfüllt sind,
- dass sich der Motor im Leerlauf befindet,
- dass die Abgasrückführung (AGR) ausgeschaltet ist und
- dass sich in dem dem Partikelfilter vorgeschalteten Teil des Abgasstranges diesem Motorbetriebszustand entsprechende Verhältnisse eingestellt haben und
dass anschließend das Abgasgegendrucksignal (S_{IST}) mit einem eine ausreichende Rußbeladung zum Auslösen einer Regeneration des Partikelfilters darstellenden Schwellwert (S_{W}) verglichen wird und die Heizeinrichtung zum Auslösen des Regenerationsvorganges freigeschaltet wird, wenn das erfasste Abgasgegendrucksignal (S_{IST}) größer ist als der Schwellwert (S_{W}).

2. Verfahren nach Anspruch 1, **dadurch gekennzeichnet, dass** nach Freischalten der Heizeinrichtung zum Auslösen des Regenerationsvorganges diese erst dann angeschaltet wird, wenn das aktuell erfasste Abgasgegendrucksignal (S_{IST}) und zumindest ein- oder mehrere unmittelbar zuvor erfasste Abgasgegendrucksignale größer sind als der Schwellwert (S_{W}).

3. Verfahren nach Anspruch 1 oder 2, **dadurch gekennzeichnet, dass** der Lastzustand des Motors erfasst wird und dass bei Feststellen eines über eine vorbestimmte Zeitdauer (tₓ) anhaltenden Lastzustandes (t_{LSR}), bei dem selbsttätig ein Rußabbrand und somit eine Regeneration des Partikelfilters erfolgt, die Zähler zum Generieren der Auslösesignale zurückgesetzt werden.

4. Verfahren nach Anspruch 3, **dadurch gekennzeichnet, dass** der Schwellwert (S_{W}), mit dem die erfassten Abgasgegendrucksignale (S_{IST}) verglichen werden, an das sich in der auf eine Zählerrücksetzung folgenden Leerlaufphase gemessene Abgasgegendrucksignal angepasst wird.

5. Verfahren nach einem der Ansprüche Anspruch 1 bis 4, **dadurch gekennzeichnet, dass** die Heizeinrichtung unabhängig von einer vorherigen Freischaltung zum Auslösen des Regenerationsvorganges auch dann angeschaltet wird, wenn sich innerhalb eines bestimmten Betriebsabschnittes keine Leerlaufphase eingestellt hat.

6. Verfahren nach Anspruch 5, **dadurch gekennzeichnet, dass** als Betriebsabschnitte die Motorlaufzeit und/oder die zurückgelegte Wegstrecke ausgewertet werden.

7. Verfahren nach Anspruch 5, **dadurch gekennzeichnet, dass** innerhalb eines Betriebsabschnittes wiederholt die Temperatur des den Partikelfilter anströmenden Abgases erfasst, in Abhängigkeit von der aktuellen Drehzahl der Brennkraftmaschine hinsichtlich einer diesen Betriebszustand zugeordneten Partikelfilterbeladungsgröße ausgewertet, die Auswerteergebnisse aufsummiert, die Summe mit einem vorgegebenen, den Beladungszustand des Partikelfilters für eine Regeneration als geeignet darstellenden Grenzwert verglichen und bei Überschreiten des Grenzwertes die Heizeinrichtung zum Auslösen des Regenerationsvorganges freigeschaltet wird und dass nach dem Regenerationsvorgang ein neuer Betriebsabschnitt beginnt.

8. Verfahren zum Regeln der Ansteuerung einer Heizeinrichtung zum Regenerieren eines in den Abgasstrang einer Brennkraftmaschine, etwa eines Dieselmotors eingeschalteten Partikelfilters, **dadurch gekennzeichnet, dass** innerhalb eines Betriebsabschnittes wiederholt die Temperatur des den Partikelfilter anströmenden Abgases erfasst, in Abhängigkeit von der aktuellen Drehzahl der Brennkraftmaschine hinsichtlich einer diesen Betriebszustand zugeordneten Partikelfilterbeladungsgröße ausgewertet, die Auswerteergebnisse aufsummiert, die Summe mit einem vorgegebenen, den Beladungszustand des Partikelfilters für eine Regeneration als geeignet darstellenden Grenzwert verglichen und bei Überschreiten des Grenzwertes die Heizeinrichtung zum Auslösen des Regenerationsvorganges freigeschaltet wird und dass nach dem Regenerationsvorgang ein neuer Betriebsabschnitt beginnt.

9. Verfahren nach Anspruch 7 oder 8, **dadurch gekennzeichnet, dass** eine Erfassung der Temperatur und der Drehzahl über eine vorgegebene Periode hinweg erfolgt, die innerhalb dieser Periode erfassten Temperatur- und Drehzahldaten gemittelt werden und dieser Mittelwert für die weitere Auswertung verwendet wird.

10. Verfahren nach einem der Ansprüche 7 bis 9, **dadurch gekennzeichnet, dass** nach Freischalten der Heizeinrichtung zum Auslösen des Regenerationsvorganges die Heizeinrichtung angeschaltet wird, wenn die Brennkraftmaschine sich in einem Betriebszustand befindet, bei dem mit einer Regeneration einer möglichst großen Filterfläche des Partikelfilters gerechnet werden kann.

11. Verfahren nach Anspruch 10, **dadurch gekennzeichnet, dass** zum Bestimmen des für eine Regeneration günstigen Betriebszustandes der Brennkraftmaschine die Temperatur des den Partikelfilter anströmenden Abgases erfasst und in Abhängigkeit von der aktuellen Drehzahl der Brennkraftmaschine hinsichtlich der Wahrscheinlichkeit des diesen Betriebszustand zugeordneten Regenerationserfolges ausgewertet wird.

12. Verfahren nach Anspruch 10 oder 11, **dadurch gekennzeichnet, dass** die Zeitspanne zwischen dem Freischalten und dem Anschalten der Heizeinrichtung begrenzt ist und dass nach Ablauf der Zeitspanne die Heizeinrichtung unabhängig vom Betriebszustand der Brennkraftmaschine angeschaltet wird.

13. Verfahren nach Anspruch 12, **dadurch gekennzeichnet, dass** die Anforderungen an die voraussichtliche Qualität eines Rußabbrandes mit abnehmender Restlaufzeit der Zeitspanne reduziert werden.

14. Verfahren nach einem der Ansprüche 1 bis 13, **dadurch gekennzeichnet, dass** die Heizeinrichtung eine thermoelektrische Heizeinrichtung, insbesondere eine Strahlungsheizung ist.

## Claims

1. Method for controlling the triggering of a heating device for regenerating a particle filter activated in the exhaust tract of an internal combustion engine, for instance a diesel engine, where the exhaust gas back pressure generated by the particle filter is detected as a measurement for the soot load state of the particle filter, and the exhaust gas back pressure (S_{ACTUAL}) is measured when the following conditions are met,
- the engine is idling,
- the exhaust gas recirculation (AGR) is switched off and
- corresponding conditions have been set in the part of the exhaust tract upstream of the particle filter and
- subsequently, the exhaust gas back pressure signal (S_{ACTUAL}) is compared with a threshold value (S_{W}) representing a soot load sufficient for triggering a regeneration of the particle filter and the heating device is enabled for triggering the regeneration operation when the exhaust gas back pressure detected (S_{ACTUAL}) is greater than the threshold (S_{W}).

2. Method according to Claim 1, **characterized in that** after enabling the heating device to trigger the regeneration operation, said heating device is not switched on until the currently detected exhaust gas back pressure signal (S_{ACTUAL}) and at least one or more exhaust gas back pressure signals detected directly beforehand are greater than the threshold (S_{W}).

3. Method according to Claim 1 or 2, **characterized in that** the load state of the engine is detected and **in that** when a load state (T_{LSR}) sustained over a predetermined time duration (tₓ) is ascertained where the soot is automatically burned off and the particle filter is consequently automatically regenerated, the counters for generating the triggering signals are reset.

4. Method according to Claim 3, **characterized in that** the threshold value (S_{W}) with which the detected exhaust gas back pressure signals (S_{ACTUAL}) are compared, is adapted to the exhaust gas back pressure signal measured in the idling phase following a counter being reset.

5. Method according to one of Claims 1 to 4, **characterized in that** the heating device, irrespective of a prior enabling, is switched on for triggering the regeneration operation even if no idling phase has occurred within a predetermined operating section.

6. Method according to Claim 5, **characterized in that** the engine run time and/or the distance covered are evaluated as operating sections.

7. Method according to Claim 5, **characterized in that** within an operating section the temperature of the exhaust gas flowing against the particle filter is repeatedly detected, is evaluated as a function of the current speed of the internal combustion engine with regard to a particle filter load variable associated with said operating state, the evaluation results are added up, the sum is compared with a predetermined limit value which indicates that the load state of the particle filter is suitable for a regeneration and where the limit value is exceeded, the heating device is enabled to trigger the regeneration operation and **in that** a new operating section begins after the regeneration operation.

8. Method for controlling the activation of a heating device for regenerating a particle filter activated in the exhaust tract of an internal combustion engine, for instance a diesel engine, **characterized in that** within an operating section the temperature of the exhaust gas flowing against the particle filter is repeatedly detected, is evaluated as a function of the current speed of the internal combustion engine with regard to a particle filter load variable associated with said operating state, the evaluation results are added up, the sum is compared with a predetermined limit value which indicates that the load state of the particle filter is suitable for a regeneration and where the limit value is exceeded, the heating device is enabled to trigger the regeneration operation and **in that** a new operating section begins after the regeneration operation.

9. Method according to Claim 7 or 8, **characterized in that** a determining of the temperature and of the speed is effected over a predetermined period, the temperature and speed data detected within said period is averaged and said average is used for further evaluation.

10. Method according to one of Claims 7 to 9, **characterized in that** after enabling the heating device, the heating device is activated for triggering the regeneration operation when the internal combustion engine is situated in an operating state where a largest possible filter surface of the particle filter can be regenerated.

11. Method according to Claim 10, **characterized in that** to determine the operating state of the internal combustion engine that is favourable for a regeneration, the temperature of the exhaust gas flowing against the particle filter is detected and evaluated as a function of the current speed of the internal combustion engine with regard to the probability of the regeneration success associated with said operating state.

12. Method according to Claim 10 or 11, **characterized in that** the time period between the enabling and the activation of the heating device is limited and **in that** once the time period has expired, the heating device is activated irrespective of the operating state of the internal combustion engine.

13. Method according to Claim 12, **characterized in that** the requirements for the expected quality of a soot burn off are reduced as the remaining time of the time period gets smaller.

14. Method according to one of Claims 1 to 13, **characterized in that** the heating device is a thermoelectric heating device, in particular a radiant heater.

## Revendications

1. Procédé de régulation d'un dispositif de chauffage destiné à régénérer un filtre à particules intégré dans le circuit des gaz d'échappement d'une machine à moteur à combustion, par exemple un moteur diesel, pour lequel la contrepression des gaz d'échappement produite par le filtre à particules est détectée pour indiquer l'importance de la charge en suie dans le filtre à particules et pour lequel la contrepression des gaz d'échappement (S_{IST}) est mesurée lorsque les conditions suivantes sont remplies :
- le moteur est en marche à vide,
- la recirculation des gaz (EGR - Exhaust Gaz Recirculation) est coupée et
- des conditions adéquates correspondant à cet état de fonctionnement du moteur se présentent dans la partie du circuit d'échappement qui précède le filtre à particules et
le signal de contrepression des gaz d'échappement (S_{IST}) est ensuite comparé à une valeur de seuil (S_{W}) significative d'une charge suffisante en suie pour déclencher une régénération du filtre à particules et le dispositif de chauffage est activé afin de déclencher le processus de régénération lorsque le signal détecté de contrepression des gaz d'échappement (S_{IST}) est supérieur à la valeur de seuil (S_{W}).

2. Procédé selon la revendication1 **caractérisé en ce qu'**après l'activation du dispositif de chauffage afin de déclencher le processus de régénération, celui-là n'est mis en marche que si le signal de contrepression des gaz d'échappement actuellement détecté (S_{IST}) et au moins un ou plusieurs signaux de contrepression des gaz d'échappement détectés juste avant sont supérieurs à la valeur de seuil (S_{W}).

3. Procédé selon la revendication 1 ou 2 **caractérisé en ce que** l'état de charge du moteur est détecté et les compteurs destinés à générer les signaux de déclenchement sont remis à zéro si l'on constate un état de charge permanent pendant un laps de temps (tₓ) prédéfini lors lequel se produit une combustion spontanée de la suie et par conséquent une régénération du filtre à particules.

4. Procédé selon la revendication 3 **caractérisé en ce que** la valeur de seuil (S_{W}) à laquelle sont comparés les signaux de contrepression des gaz d'échappement détectés (S_{IST}), est ajustée au signal de contrepression des gaz d'échappement mesuré au cours de la phase de marche à vide qui suit la remise à zéro des compteurs.

5. Procédé selon l'une des revendications 1 à 4, **caractérisé en ce que** le dispositif de chauffage est mis en marche indépendamment de l'activation préalable visant à déclencher le processus de régénération, même s'il n'y a eu aucune phase de marche à vide au cours d'un intervalle de fonctionnement défini.

6. Procédé selon la revendication 5 **caractérisé en ce qu'**on exploite, en tant qu'intervalles de fonctionnement, le temps de service du moteur et/ou les trajets parcourus.

7. Procédé selon la revendication 5 **caractérisé en ce qu'**au cours d'un intervalle de fonctionnement, la température des gaz d'échappement arrivant dans le filtre à particules est détectée de manière répétée, l'importance de la charge du filtre à particule correspondant à l'état de fonctionnement est évaluée en fonction de la vitesse de rotation actuelle de la machine à moteur à combustion, les résultats de l'évaluation sont additionnés, la somme est comparée à une valeur de seuil de consigne, dont on estime qu'elle représente de manière adéquate l'état de charge du filtre à particules pour une régénération et si cette valeur de seuil est dépassée, le dispositif de chauffage destiné à déclencher le processus de régénération est activé et qu'à l'issue du processus de régénération commence un nouvel intervalle de fonctionnement.

8. Procédé de régulation d'un dispositif de chauffage destiné à régénérer un filtre à particules intégré dans le circuit des gaz d'échappement d'une machine à moteur à combustion, par exemple un moteur diesel, **caractérisé en ce que** la température des gaz arrivant dans le filtre à particules est détectée de manière répétée, l'importance de la charge du filtre à particule correspondant à l'état de fonctionnement est évaluée en fonction de la vitesse de rotation actuelle de la machine à moteur à combustion, les résultats de l'évaluation sont additionnés, la somme est comparée à une valeur de seuil de consigne, dont on estime qu'elle représente de manière adéquate l'état de charge du filtre à particules pour une régénération et si cette valeur de seuil est dépassée, le dispositif de chauffage destiné à déclencher le processus de régénération est activé et qu'à l'issue du processus de régénération commence un nouvel intervalle de fonctionnement.

9. Procédé selon la revendication 7 ou 8 **caractérisé en ce que** la détection de la température et de la vitesse de rotation se fait au cours d'une période prédéfinie, qu'une moyenne des données de température et de vitesse de rotation détectées au cours de cette période est dégagée et que cette valeur moyenne est utilisée pour la suite de l'exploitation des données.

10. Procédé selon l'une des revendications 7 à 9 **caractérisé en ce que** le dispositif de chauffage est mis en marche après l'activation du dispositif de chauffage destiné à déclencher le processus de régénération, lorsque la machine à moteur à combustion est dans un état de fonctionnement laissant espérer une régénération d'une surface de filtration si possible de grande dimension dans le filtre à particules.

11. Procédé selon la revendication 10 **caractérisé en ce que** la température des gaz d'échappement arrivant dans le filtre à particules est détectée afin de déterminer l'état de fonctionnement de la machine à moteur à combustion favorable à une régénération et exploitée en fonction de la vitesse de rotation actuelle de la machine à moteur à combustion en vue de déterminer la probabilité de la réalisation d'une régénération correspondant à cet état de fonctionnement.

12. Procédé selon la revendication 10 ou 11 **caractérisé en ce que** le laps de temps entre l'activation et la mise en marche du dispositif de chauffage est limité et qu'après écoulement de ce laps de temps, le dispositif de chauffage est mis en marche indépendamment de l'état de fonctionnement de la machine à moteur à combustion.

13. Procédé selon la revendication 12 **caractérisé en ce que** les exigences de la qualité future d'une combustion des suies se réduisent au fur et à mesure que s'écoule le laps de temps.

14. Procédé selon l'une des revendications 1 à 13 **caractérisé en ce que** le dispositif de chauffage est un dispositif de chauffage thermoélectrique, notamment un chauffage par rayonnement.
